# FASCICULE DE BREVET EUROPEEN

(11) **EP 1 547 812 B1**
(45) Date de publication et mention de la délivrance du brevet: **18.06.2008**
(21) Numéro de dépôt: 04292725.1
(22) Date de dépôt: 18.11.2004
(51) Int. Cl.: B60B 19/10, B60B 7/00

(54) **Dispositif de refroidissement de roues**
Kühlvorrichtung für Räder
Cooling device for wheels

(30) Priorité: 27.11.2003 FR 0313903
(43) Date de publication de la demande: 29.06.2005
(73) Titulaire: NEXTER Systems, 42328 Roanne (FR)
(72) Inventeur: Brun, Michel, 18120 Quincy (FR)
(74) Mandataire: Célanie, Christian

(56) Documents cités:
- EP-A- 1 319 526
- FR-A- 2 506 415
- GB-A- 2 291 844
- US-A- 4 135 764
- US-A1- 2003 047 394

## Description

Le secteur technique de la présente invention est celui des dispositifs de refroidissement d'une roue de véhicule et de masquage des zones susceptibles d'émettre un rayonnement infrarouge.

L'évolution de la technologie des caméras et capteurs thermiques permet de détecter à de très grandes distances des sources chaudes dans l'environnement terrestre, tels des gaz d'échappement et de refroidissement du moteur d'un véhicule, mais également les parties chaudes du véhicule telles les roues, dont les pneumatiques s'échauffent suite à leurs déformations lors du roulage, et les jantes dont la température augmente par conduction de la chaleur issue des frottements internes de la jante ou du moyeu et par l'effet des organes dissipateurs (freins) souvent disposées à proximité de la jante ou du moyeu de la roue. Pour améliorer la furtivité face à l'évolution des capteurs infrarouges, il devient donc nécessaire de réduire le niveau d'énergie rayonnée par les parties chaudes des véhicules en refroidissant et/ou en masquant ces parties.

Un dispositif de refroidissement d'une roue selon le préambule de la revendication 1 est connu de US-A-4135764.

Le but de la présente invention est de fournir un dispositif palliant ces inconvénients, d'une part en refroidissant les jantes et pneumatiques des roues d'un véhicule et d'autre part en masquant les jantes de ces roues.

L'invention a donc pour objet un dispositif de refroidissement d'une roue de véhicule comportant une jante supportée et entraînée en rotation par un moyeu, caractérisé en ce qu'il comporte des ailettes solidarisées par un anneau afin de former ensemble une couronne mobile en rotation par rapport à la jante et dont l'axe de rotation est confondu avec l'axe de rotation de la jante, la surface intérieure de l'anneau coopérant avec les ailettes afin de créer un flux d'air centrifuge.

Selon une caractéristique, les ailettes sont de forme sensiblement trapézoïdale et l'anneau est tronconique.

Selon une autre caractéristique, les ailettes sont disposées sensiblement radialement par rapport à l'axe de rotation de la couronne.

Selon encore une autre caractéristique, le dispositif comporte un plateau, porté par un axe, coopérant avec la surface extérieure de l'anneau tronconique afin de créer un flux d'air centripète.

Selon une autre caractéristique, le plateau comporte sur sa face interne des volutes, barreaux, aubes ou bavettes épousant la surface extérieure de l'anneau tronconique.

Selon encore une autre caractéristique, le dispositif comporte, en sa partie centrale et à proximité de la jante, un déflecteur de forme sensiblement conique ou hyperboloïdale.

Selon une autre caractéristique, le déflecteur comporte des nervures, prolongées par des bras afin de le rendre solidaire de la couronne.

Selon une autre caractéristique, la couronne est entraînée en rotation par un moteur électrique ou hydraulique.

Selon une autre caractéristique, la couronne est entraînée en rotation par la jante, par l'intermédiaire d'un système de pignons ou d'un train épicycloïdal, de façon à assurer une rotation de la couronne à une vitesse différente et/ou dans un sens opposé de la rotation de la jante.

Un tout premier avantage du dispositif selon l'invention réside dans le fait qu'il constitue un moyen efficace de ventilation et de refroidissement de la jante et du pneumatique d'une roue de véhicule.

Un autre avantage du dispositif réside dans le fait qu'il constitue un moyen efficace de masquage des zones chaudes de la jante d'une roue de véhicule.

Un autre avantage réside dans le fait qu'un tel dispositif est autonettoyant et qu'il permet d'éviter tout risque d'encrassement.

D'autres caractéristiques, détails et avantages de l'invention ressortiront plus clairement de la description donnée ci-après à titre indicatif en relation avec des dessins dans lesquels :
- les figures 1a et 1b représentent en perspective le dispositif selon l'invention, et
- la figure 2 est une vue en coupe illustrant un exemple de réalisation de l'invention.

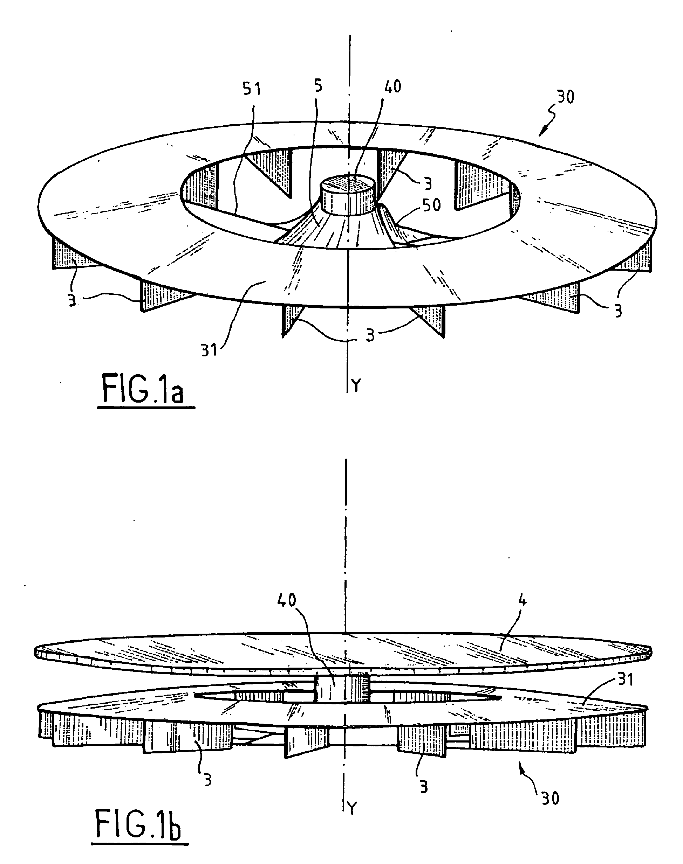

Les figures 1a et 1b sont des vues en perspective du dispositif de refroidissement selon l'invention. Le dispositif de refroidissement est constitué par des ailettes 3, de forme sensiblement trapézoïdale, solidaires d'un anneau tronconique 31 afin de réaliser une couronne 30 d'axe de symétrie Y. Le dispositif comporte également un déflecteur 5 pourvu de nervures 50, ces nervures étant prolongées par des bras 51. Chaque bras 51 est solidaire d'une ailette 3 afin de rendre le déflecteur solidaire de la couronne 30.

Le dispositif comporte également un plateau 4 (représenté uniquement sur la figure 1b), porté par un axe 40.

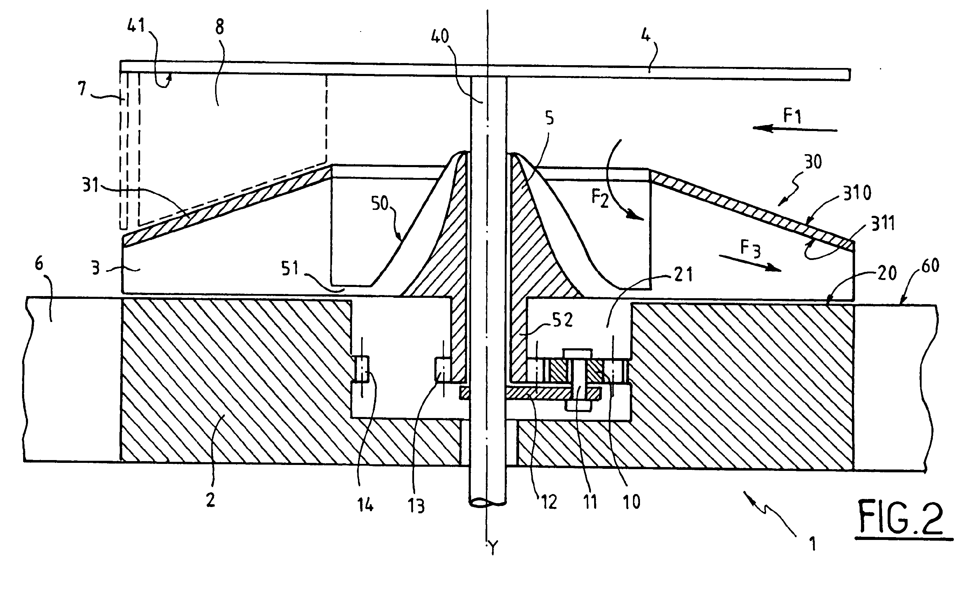

La figure 2 est une vue en coupe diamétrale illustrant un mode de réalisation de l'invention et son intégration sur une roue. Dans cet exemple, le dispositif de refroidissement équipe une roue 1 de véhicule, composée d'une jante 2 supportant un pneumatique 6. La jante 2 est supportée et entraînée en rotation par un moyeu (non représenté sur la figure) solidaire de la jante 2, le moyeu et la jante pouvant être une seule et même pièce ou deux pièces solidarisées par des moyens connus, par exemple au moyen de boulons. Le dispositif de refroidissement est réalisé, comme expliqué précédemment, par le plateau 4, porté par l'axe 40, les ailettes 3, solidaires de l'anneau tronconique 31, le déflecteur 5 de forme sensiblement hyperboloïdale.

Les ailettes 3 et l'anneau tronconique 31 constituent la couronne 30 dont l'axe de symétrie Y est confondu avec l'axe de rotation de la roue 1. Les ailettes 3 sont disposées sensiblement radialement par rapport à l'axe Y. Les axes de symétrie du plateau 4, de l'axe 40 et du déflecteur 5 sont également confondus avec l'axe Y.

Le déflecteur 5 comporte des nervures 50, dont les extrémités 51 constituent des bras de liaison permettant de solidariser le déflecteur 5 avec les ailettes 3. Le déflecteur 5 comporte dans sa partie centrale un alésage afin de permettre sa rotation par rapport à l'axe 40.

Le déflecteur 5 est prolongé, à l'intérieur de la jante 2, par une tubulure 52 comportant des dentures 13. La jante 2 comporte en sa partie centrale une cavité 21 permettant l'évolution d'un satellite 10. La jante 2 comporte, au niveau de cette cavité 21, des dentures 14. Le satellite 10 est en rotation autour d'un axe 11 de satellite, porté par un porte-satellite 12, fixe par rapport à la jante 2 et au déflecteur 5. On pourra par exemple rendre fixe ce porte-satellite en le solidarisant avec l'axe 40. Le satellite coopère d'une part avec les dentures 13 de la tubulure 52 et d'autre part avec les dentures 14 de la jante 2, afin de réaliser un train épicycloïdal, bien connu de l'Homme du métier.

Le dispositif assure deux fonctions : le masquage de la jante 2 et le refroidissement de la jante 2 et du pneumatique 6.

Le plateau 4, dont la surface est sensiblement identique à la surface apparente de la jante 2, permet de réaliser le masquage de la jante 2 qui constitue une zone chaude de la roue 1 et ainsi de réduire considérablement le rayonnement infrarouge de la roue.

Lorsque le véhicule se déplace, le plateau 4 permet également, en coopération avec la surface externe 310 de l'anneau tronconique 31, de canaliser le flux d'air frais à circulation rapide, selon la direction F₁.

La surface intérieure 311 de l'anneau tronconique 31, en coopération avec les ailettes 3 et avec la surface 20 de la jante 2, réalise un ventilateur centrifuge dirigeant le flux d'air vers l'extérieur du dispositif, selon la direction F₃. La dépression créée au centre du dispositif engendre entre la surface externe 310 de l'anneau tronconique 31 et le plateau 4 un flux d'air F₁, L'anneau tronconique 31 est en rotation par rapport au plateau 4 et, du fait de la conicité de l'anneau 31, la distance entre le plateau 4 et l'anneau 31 diminue au voisinage de l'axe Y, ce qui permet de réaliser un convergeant dirigeant le flux d'air vers le centre du dispositif.

Le déflecteur 5 permet d'orienter la trajectoire du flux d'air, en effet, pour minimiser les pertes de charges dues au trajet de la lame d'air selon la flèche F₂ qui, d'une direction centripète passe à une direction centrifuge, il est nécessaire de lui imprimer un mouvement le moins brutal possible. La forme hyperboloïdale, ou conique, du déflecteur 5 permet d'orienter le flux d'air selon la direction F₂. Les nervures 50 permettent d'amorcer le mouvement rotatif imposé par les ailettes 3.

La géométrie du dispositif permet de créer une lame d'air constante et d'imprimer à celle-ci un mouvement rotatif, tourbillonnaire, avec une légère tendance à la contraction de veine en direction de la surface 20 de la jante 2 et de la surface 60 du pneumatique 6, ce qui favorise le léchage de ceux-ci et permet de réaliser un drainage thermique efficace.

Afin de mieux canaliser et orienter le flux d'air entrant dans le dispositif, on peut envisager de munir le plateau 4, au niveau de sa face interne 41, de barreaux 7 et de bavettes 8 (représentés en pointillés sur la figure), ou encore d'aubes ou de volutes. Ces barreaux, bavettes, aubes ou volutes seront dimensionnées et disposées de sorte à épouser la surface extérieure de l'anneau tronconique 31 sans pour autant être en contact avec ce dernier. En effet, la couronne 30 est en rotation par rapport au plateau 4, il est donc important de veiller à ce qu'aucun élément fixé au plateau 4 ne heurte la couronne 30 ou ne frotte contre celle-ci.

L'utilisation d'un train épicycloïdal permet d'imposer au déflecteur 5 et à la couronne 30 une rotation dont la vitesse est différente et/ou dont le sens est opposé par rapport à la rotation de la jante 2.

Pour une meilleure compréhension du dispositif un seul satellite a été représenté, mais on peut également réaliser ce train épicycloïdal avec plusieurs satellites. Le train épicycloïdal permet de réaliser simplement et avec un faible encombrement la rotation de la couronne 30.

D'autres moyens de rotations sont envisageables. On pourra par exemple effectuer cette rotation au moyen d'un moteur électrique ou pneumatique. L'utilisation d'un moteur électrique pour entraîner la couronne 30 en rotation est particulièrement judicieuse dans le cas où la roue 1 est elle-même déjà entraînée par un moteur électrique.

## Revendications

1. Dispositif de refroidissement d'une roue (1) de véhicule comportant une jante (2) supportée et entraînée en rotation par un moyeu, **caractérisé en ce qu**'il comporte des ailettes (3) solidarisées par un anneau (31) afin de former ensemble une couronne (30) mobile en rotation par rapport à la jante (2) et dont l'axe de rotation est confondu avec l'axe (Y) de rotation de la jante (2), la surface intérieure de l'anneau (31) coopérant avec les ailettes (3) afin de créer un flux d'air centrifuge.

2. Dispositif de refroidissement d'une roue de véhicule selon la revendication 1, **caractérisé en ce que** les ailettes (3) sont de forme sensiblement trapézoïdale et **en ce que** l'anneau (31) est tronconique.

3. Dispositif de refroidissement d'une roue de véhicule selon la revendication 1 ou 2, **caractérisé en ce que** les ailettes (3) sont disposées sensiblement radialement par rapport à l'axe de rotation de la couronne.

4. Dispositif de refroidissement d'une roue de véhicule selon la des revendication 2 ou 3, **caractérisé en ce qu**'il comporte un plateau (4), porté par un axe (40), coopérant avec la surface extérieure de l'anneau tronconique (31) afin de canaliser un flux d'air centripète.

5. Dispositif de refroidissement d'une roue de véhicule selon la revendication 4, **caractérisé en c**e le plateau (4) comporte sur sa face interne (41) des volutes, barreaux (7), aubes ou bavettes (8) épousant la surface extérieure (310) de l'anneau tronconique (31).

6. Dispositif de refroidissement d'une roue de véhicule selon l'une des revendications 4 ou 5, **caractérisé en ce qu**'il comporte, en sa partie centrale et à proximité de la jante (2), un déflecteur (5) de forme sensiblement conique ou hyperboloïdale.

7. Dispositif de refroidissement d'une roue de véhicule selon la revendication 6, **caractérisé en ce que** le déflecteur (5) comporte des nervures (50), prolongées par des bras (51) afin de le rendre solidaire de la couronne (30).

8. Dispositif de refroidissement d'une roue de véhicule selon l'une des revendications 1 à 7, **caractérisé en ce que** la couronne (30) est entraînée en rotation par un moteur électrique ou hydraulique.

9. Dispositif de refroidissement d'une roue de véhicule selon l'une revendications 1 à 7, **caractérisé en ce que** la couronne (30) est mécaniquement entraînée en rotation par la jante (2), par l'intermédiaire d'un système de pignons ou d'un train épicycloïdal (10, 11, 12), de façon à assurer une rotation de la couronne (30) à une vitesse différente et/ou dans un sens opposé de la rotation de la jante (2).

## Claims

1. A cooling device for the wheel (1) of a vehicle which comprises a wheel rim (2) supported and driven in rotation by a hub, **characterised in that** it incorporates fins (3) made integral with a ring (31) so as to form together a crown (30) able to rotate with respect to the rim (2) and whose axis of spin is the same as the spin axis (Y) of the rim (2), the internal surface of the ring (31) cooperating with the fins (3) so as to create a centrifugal air flow.

2. A cooling device for a vehicle wheel according to Claim 1, **characterised in that** the fins (3) are substantially trapezoidal in shape and the ring (31) is tapered.

3. A cooling device for a vehicle wheel according to Claim 1 or 2, **characterised in that** the fins (3) are positioned substantially radially with respect to the spin axis of the crown.

4. A cooling device for a vehicle wheel according to one of Claims 2 or 3, **characterised in that** it incorporates a plate (4), carried by a shaft (40) and cooperating with the external surface of the tapered ring (31) so as to channel a centripetal air flow.

5. A cooling device for a vehicle wheel according to Claim 4, **characterised in that** the plate (4) incorporates on its inner face (41) either scrolls, bars (7), vanes or flaps (8) matching the external surface (310) of the tapered ring (31).

6. A cooling device for a vehicle wheel according to one of Claims 4 or 5, **characterised in that** it incorporates, in its central part close to the rim (2), a deflector (5) of a substantially conical or hyperboloidal shape.

7. A cooling device for a vehicle wheel according to Claim 6, **characterised in that** the deflector (5) incorporates ribs (50), extended by arms (51) so as to make it integral with the crown (30).

8. A cooling device for a vehicle wheel according to one of Claims 1 to 7, **characterised in that** the crown (30) is driven in rotation by an electrical or hydraulic motor.

9. A cooling device for a vehicle wheel according to one of Claims 1 to 7, **characterised in that** the crown (30) is mechanically driven in rotation by the rim (2), by means of a system of pinions or by an epicycloidal gear train (10, 11, 12), so as to ensure a rotation of the crown (30) at a different rate and/or in the opposite direction to that of the wheel rim (2).

## Patentansprüche

1. Vorrichtung zum Kühlen eines Fahrzeugrads (1) umfassend eine Felge (2), die durch eine Nabe gehalten und in Drehung versetzt wird, **dadurch gekennzeichnet, dass** sie fest mit einem Ring (31) verbundene Schaufeln (3) umfasst, um zusammen einen in Bezug auf die Felge (2) drehbeweglichen Kranz (30) zu bilden, und dessen Drehachse mit der Drehachse (Y) der Felge (2) zusammenfällt, wobei die innere Fläche des Rings (31) mit den Schaufeln (3) zusammenwirkt, um einen zentrifugalen Luftstrom zu bilden.

2. Vorrichtung zum Kühlen eines Fahrzeugrads nach Anspruch 1, **dadurch gekennzeichnet, dass** die Schaufeln (3) von im wesentlichen trapezförmiger Gestalt sind und dass der Ring (31) kegelstumpfartig ist.

3. Vorrichtung zum Kühlen eines Fahrzeugrads nach Anspruch 1 oder 2, **dadurch gekennzeichnet, dass** die Schaufeln (3) im wesentlichen radial in Bezug auf die Drehachse des Kranzes angeordnet sind.

4. Vorrichtung zum Kühlen eines Fahrzeugrads nach Anspruch 2 oder 3, **dadurch gekennzeichnet, dass** sie eine von einer Achse (40) getragene Scheibe (4) umfasst, die mit der äußeren Fläche des kegelstumpfartigen Rings (31) zusammenwirkt, um einen zentripetalen Luftstrom zu bilden.

5. Vorrichtung zum Kühlen eines Fahrzeugrads nach Anspruch 4, **dadurch gekennzeichnet, dass** die Scheibe (4) auf ihrer inneren Fläche (41) Spiralen, Stäbe (7), Schaufeln oder Lappen (8) umfasst, die sich an die äußere Fläche (310) des kegelstumpfartigen Rings (31) anpassen.

6. Vorrichtung zum Kühlen eines Fahrzeugrads nach einem der Ansprüche 4 oder 5, **dadurch gekennzeichnet, dass** sie in ihrem zentralen Abschnitt und in der Nähe der Felge (2) einen Abweiser (5) von im wesentlichen konischer oder hyperboloider Form umfasst.

7. Vorrichtung zum Kühlen eines Fahrzeugrads nach Anspruch 6, **dadurch gekennzeichnet, dass** der Abweiser (5) Rippen (50) umfasst, die von Armen (51) verlängert werden, um ihn fest mit dem Kranz (30) zu verbinden.

8. Vorrichtung zum Kühlen eines Fahrzeugrads nach einem der Ansprüche 1 bis 7, **dadurch gekennzeichnet, dass** der Kranz (30) durch einen elektrischen oder hydraulischen Motor in Drehung versetzt wird.

9. Vorrichtung zum Kühlen eines Fahrzeugrads nach einem der Ansprüche 1 bis 7, **dadurch gekennzeichnet, dass** der Kranz (30) mit Hilfe eines Systems von Zahnrädern oder eines Umlaufgetriebes (10, 11, 12) durch die Felge (2) mechanisch in Drehung versetzt wird, derartig, dass eine Drehung des Kranzes (30) mit einer unterschiedlichen Geschwindigkeit und/oder in eine der Drehung der Felge (2) entgegengesetzte Richtung gewährleistet wird.
